(19) Europäisches Patentamt
European Patent Office
Office européen des brevets

(11) Veröffentlichungsnummer : **0 516 949 B1**

(12) # EUROPÄISCHE PATENTSCHRIFT

(45) Veröffentlichungstag der Patentschrift : **17.08.94 Patentblatt 94/33**

(51) Int. Cl.$^5$ : **B01J 20/18**

(21) Anmeldenummer : **92106567.8**

(22) Anmeldetag : **16.04.92**

(54) **Formkörper enthaltend dealuminierten Zeolith Y und das Verfahren zu ihrer Herstellung.**

(30) Priorität : **27.05.91 DE 4117202**
**31.01.92 DE 4202671**

(43) Veröffentlichungstag der Anmeldung : **09.12.92 Patentblatt 92/50**

(45) Bekanntmachung des Hinweises auf die Patenterteilung : **17.08.94 Patentblatt 94/33**

(84) Benannte Vertragsstaaten : **AT BE CH DE DK ES FR GB IT LI NL SE**

(56) Entgegenhaltungen :
**EP-A- 490 037**
**EP-A- 0 167 324**
**EP-A- 0 297 543**
**WO-A-90/09235**
**DE-A- 1 542 536**
**DE-A- 1 592 282**
**DE-B- 1 080 084**
**FR-A- 1 200 412**

(73) Patentinhaber : **Degussa Aktiengesellschaft**
**Weissfrauenstrasse 9**
**D-60311 Frankfurt (DE)**

(72) Erfinder : **Sextl, Elfriede, Dr.**
**Am Frohnbügel 11**
**W-8752 Geiselbach (DE)**
Erfinder : **Roland, Eckehart, Dr.**
**Hochstädter Landstrasse 102**
**W-6450 Hanau 1 (DE)**
Erfinder : **Kleinschmit, Peter, Prof.**
**Wildaustrasse 19**
**W-6450 Hanau 9 (DE)**
Erfinder : **Kiss, Akos, Dr.**
**Greifenhagenstrasse 10a**
**W-6450 Hanau 9 (DE)**

**EP 0 516 949 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Dealuminierter Zeolith Y mit einem Verhältnis $SiO_2/Al_2O_3$ größer 20 ist als pulverförmige Substanz bekannt.

Er wird hergestellt durch Behandlung von Zeolith Y in der Natrium- oder Wasserstofform mit Siliciumtetrachlorid bei Temperaturen von 450 bis 600 °C (WO 88/03437 - Zeol; Beyer et al, Katalysis by Zeolites, Seiten 203 ff. (1980) Elsevier).

Er weist auf Grund seines spezifischen $SiO_2/Al_2O_3$-Verhältnisses eine ausgeprägte Hydrophobie auf und kann deshalb zur Adsorption von organischen Verbindungen, zum Beispiel von Lösungsmitteln, aus Abluft und Abwässern, eingesetzt werden.

Der Einsatz von pulverförmigem dealuminierten Zeolith Y als Adsorptionsmittel in zum Beispiel Festbettadsorbern, weist den Nachteil auf, daß infolge der hohen Packungsdichte ein unerwünscht hoher Druckabfall in dem Festbett und damit eine Durchsatzverminderung eintritt. Auch beim Einsatz in einem Wirbelbettadsorber treten Schwierigkeiten auf, weil das feine Pulver nur schwer in die Wirbelschicht überführt werden kann. Ein weiterer Nachteil ist die hohe Staubentwicklung bei dem Einfüllen des Zeolithpulvers in das Festbett.

Es besteht somit die Notwendigkeit Formkörper herzustellen, die dealuminierten Zeolith Y mit unverminderter Adsorptionkapazität enthalten, sowie eine ausreichende Bruchfestigkeit und ein hydrophobes Adsorptionsverhalten zeigen.

Formkörper, welche mit dealuminiertem Zeolith Y hergestellt und zur Abluftreinigung verwendet worden, sind aus EP-A-0 490 037 bekannt.

Gegenstand der Erfindung sind Formkörper, welche dealuminierten Zeolith Y, mindestens ein Bindemittel enthalten und einen Hydrophobiefaktor von 1,5 bis 6,0, vorzugsweise von 2,5 bis 5,0 aufweisen.

Ein weiterer Gegenstand der Erfindung ist das Verfahren zur Herstellung der Formkörper, welches dadurch gekennzeichnet ist. daß man pulverförmigen, dealuminierten Zeolith Y mit mindestens einem Bindemittel, dessen Süspension in Wasser einen PH-Wert von 10 nicht übersteigt, gegebenenfalls unter Zusatz eines Gleithilfsmittels und/oder eines Porenbildners und gegebenenfalls mit Wasser oder einem organischen Lösungsmittel vermischt, die erhaltene Masse zu Formkörpern verpreßt, die Formkörper trocknet und bei 850 bis 1100°C calciniert.

Als dealuminierter Zeolith Y wird bevorzugt ein Zeolith Y eingesetzt, der ein $SiO_2/Al_2O_3$-Verhältnis von 50 bis 1000, vorzugsweise von 100 bis 300 aufweist. Insbesondere kann ein dealuminierter Zeolith Y eingesetzt werden, der eine mittlere Teilchengröße von 3 µm bis 10 µm, vorzugsweise von 4 µm bis 10 µm, gemessen mit dem Laser-Granulometer, aufweist.

Bevorzugt wird ein pulverförmiger dealuminierter Zeolith Y eingesetzt, der auf bekanntem Wege gemäß H.K. Beyer und I. Belenykaja, Catalysis by Zeolites, Elsevier, Amsterdam 1980, Seite 203 ff. hergestellt wird.

Zur Formgebung können die Granulierung sowie die Extrusion unter Verwendung einer Kolbenstrangpresse oder eines Ein- oder Zweischneckenextruders durchgeführt werden. Durch mechanische Nachbehandlungsschritte, wie zum Beispiel das Abrollen in einem Granulierteller, kann die Form der Körper weiter beeinflußt werden.

Der Formgebungsprozeß setzt sich aus mehreren Einzelschritten zusammen. Zunächst wird das Zeolithpulver mit den erforderlichen Zusatzstoffen gemischt und gegebenenfalls weiter zu einer Knetmasse verarbeitet. Die Verformbarkeit der Knetmasse kann durch ein anschliejßendes Ruhenlassen über Stunden bis Tage günstig beeinflußt werden.

Die trockene oder leicht feuchte Mischung beziehungsweise Knetmasse wird mit entsprechenden Aggregaten in definierte Formen, wie zum Beispiel Zylinder, Hohlzylinder, röhrenförmige oder zylinderartige Strangpreßlinge mit unterschiedlich ausgeformten Mantelflächen, verpreßt.

Die Trocknung kann bei Temperaturen von Raumtemperatur bis 450 °C in einem Zeitraum von 5 bis 20 Stunden durchgeführt werden.

Abschließend werden die Formkörper bei Temperaturen zwischen 850 und 1100 °C calciniert.
Die Calcinierung ist entscheidend für die mechanischen Eigenschaften, wie zum Beispiel die Bruchhärte, die von 10 bis 150 N betragen kann, und für die Porosität der Formkörper. Ferner wird die Hydrophobie des dealuminierten Zeolithen sowie der durch das Bindemittel gebildeten Matrix, daß heißt der hydrophobe Charakter des gesamten Formkörpers durch die Calcinierung beeinflußt.

Dealuminierter Y-Zeolith ist säurestabil, aber unbeständig gegenüber Laugen. Als Bindemittel und sonstige Additive können daher nur Stoffe eingesetzt werden, deren Suspension in Wasser einen pH-Wert von 10 nicht übersteigt. Bei Bindemitteln, die dieser Bedingung nicht genügen, ist vor allem während der Trocknung und Calcinierung der Grünlinge ein Zerfall der Struktur des Zeolithen, der mit dem Verlust seiner charakteristischen adsorptiven Eigenschaften einhergeht, zu beobachten.

Die pH-Wert-Messung wird durchgeführt, indem man 5 g des Bindemittels in 100 g Wasser suspendiert,

und den pH-Wert der resultierenden Aufschlämmung bei Raumtemperatur (20 ± 2 °C) bestimmt (DIN 53 200).

Als Bindemittel können Tonminerale, wie Bentonite, Kaoline, Sepiolithe oder Attapulgite eingesetzt werden.

Die Tonminerale reagieren mit Wasser teilweise alkalisch, so daß wegen der Laugenempfindlichkeit des dealuminierten Y-Zeolithen nur ausgewählte Proben mit vergleichsweise niedrigen pH-Werten ihrer wäßrigen Suspension, das heißt einen pH-Wert unter 10, in Frage kommen. Bevorzugt kann der Bentonit "Westone-L" von ECC International Verkauf GmbH oder der Sepiolith T 1-400 von Chemie Mineralien KG eingesetzt werden.

Das Tonmineral oder Mischungen verschiedener Tonminerale können in Mengen von 5 bis 40 Gew.-%, bezogen auf die eingesetzte getrocknete (atro) Zeolithmasse, eingesetzt werden.

Als Bindemittel können weiterhin Kieselsäureester wie Tetramethoxysilan oder Tetraethoxysilan sowie teilkondensierte Kieselsäureester verwendet werden. Als teilkondensierter Kieselsäureester kann zum Beispiel Ester 40 (40 % $SiO_2$ und 60 % Ethanol), eingesetzt werden, der nach vollständiger Hydrolyse in 40 Gew.% $SiO_2$ und 60 Gew.-% Ethanol übergeht. Er besteht aus Oligomeren mit unterschiedlicher Kettenlänge. Die durchschnittliche Summenformel kann mit

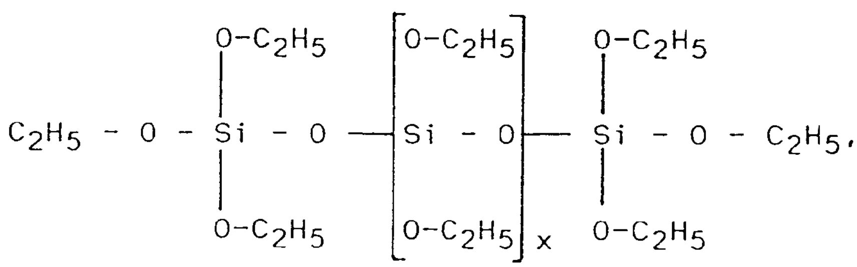

wobei x = 3, 6 ist, angegeben werden.

Diese Stoffe hydrolysieren und lassen reines $SiO_2$ als bindende Phase zurück.

Die Kieselsäureester oder Mischungen verschiedener Kieselsäureester können dem Zeolithpulver in Mengen von 10 bis 70 Gew.-%, bezogen auf die eingesetzte getrocknete (atro) Zeolithmasse zugesetzt werden.

Der Begriff atro bedeutet absolut trocken. Dieser Zustand wird durch eine Behandlung bei 800 °C über 1 Stunde erhalten.

Als Bindemittel können weiterhin Kieselsole mit einem pH-Wert von maximal 10 eingesetzt werden. Sie ergeben eine $SiO_2$-Matrix.

Als Gleithilfsmittel können Celluloseether zum Beispiel Methyl-hydroxyethyl-cellulose oder Tenside, in Mengen von 1 bis 20 Gew.-%, vorzugsweise 2 bis 10 Gew.-%, bezogen auf die eingesetzte getrocknete (atro) Zeolithmasse, eingesetzt werden.

Als Porenbildner können Polyalkohole wie zum Beispiel Fructose, Pentaerythrit, Cellulose oder Sägemehl eingesetzt werden. Diese brennen bei der Calcinierung heraus und hinterlassen Meso- und Makroporen im Zeolithformkörper. Das Gesamtvolumen dieser Poren liegt im Bereich zwischen 0,35 bis 0,90 ml/g Zeolithformkörper (atro). Die verwendeten Mengen an Porenbildnern können zwischen 1 und 30 Gew.-%, vorzugsweise 5 bis 15 Gew.-%, bezogen auf die eingesetzte Zeolithmasse (atro), betragen.

Die Feuchtigkeit und damit die Plastizität der zu verformenden Masse wird gegebenenfalls durch die Zugabe von Wasser in einer Menge von 65 bis 100 Gew.-% und/oder organischen Lösemitteln, zum Beispiel Alkohole (wie Methanol, Ethanol) in Mengen von 1 bis 5 Gew.-%, bezogen auf die Zeolithmasse (atro), eingestellt.

Eine typische Eigenschaft vieler Zeolithe ist ihr nicht-newtonsches Fließverhalten, wenn sie mit Wasser oder anderen Flüssigkeiten in bestimmten Anteilen verrührt werden. Dies kann zu großen Problemen bei dem Formgebungsprozeß führen. Auch dealuminierter Y-Zeolith zeigt dieses Verhalten, wenn seine mittlere Teilchengröße, bestimmt mit dem Laser-Granulameter, kleiner als etwa 4 µm ist. Bei grobkörnigerem Pulver treten die genannten Effekte nur schwach ausgeprägt auf.

Die erfindungsgemäßen Formkörper mit einer Mindestbruchfestigkeit von 15 bis 20 N weisen die folgenden Vorteile auf:

Im Vergleich zu Pulvern erreicht man bei der Verwendung der erfindungsgemäßen Formkörper in Festbettadsorbern vergleichsweise geringe Druckverluste, aber hohe Strömmungsgeschwindigkeiten der zu reinigenden Gase oder Flüssigkeiten und damit hohe Durchsätze.

Die erfindungsgemäßen Formkörper entwickeln bei dem Befüllen der Festbetten nur geringfügige Mengen an Staub.

Die erfindungsgemäßen Formkörper weisen eine hohe Bruchfestigkeit und Abriebfestigkeit auf.

Das Makroporenvolumen ist hoch, so daß eine gute Adsorptions- und Desorptionskinetik möglich ist.

Beispiele:

Die angegebenen Bruchhärten wurden mit einem Bruchfestigkeitstestsystem der Firma Erweka ermittelt. Hierbei wird die Minimalkraft, bei deren Einwirkung auf die Mantelfläche der Formkörper zerbricht, gemessen.

Als Zeolith wird ein mit $SiCl_4$ dealuminierter Zeolith Y mit einem Verhältnis von $SiO_2/Al_2O_3$ von 200 und einer mittleren Teilchengröße von 5 bis 8 μm, eingesetzt.

Die angegebenen Makroporenvolumina werden mit der Quecksilber-Einpreßmethode bestimmt. Dabei werden Poren mit Durchmessern größer 30 nm (nanometer) erfaßt.

Als dealuminierter Zeolith Y wird ein pulverförmiger Zeolith Y eingesetzt, der gemäß Beispiel 1 hergestellt wird:

Beispiel 1:

300 g calcinierter NaY-Zeolith ($SiO_2/Al_2O_3$ = 5,1, Glühverlust bei 1000 °C 1,5 Gew.-%) werden in einem horizontal angeordneten Glasrohr (Innendurchmesser: 10 cm, Länge der Reaktionszone: 80 cm) unter Stickstoff (10 l/h) innerhalb von 1,5 h auf 450 °C (Messung in der Gasphase über dem Zeolith) erhitzt.

Nach weiteren 15 Minuten werden dann bei dieser Temperatur 360 g $SiCl_4$, die in einem Verdampfer (100 °C) in den gasförmigen Zustand überführt werden, während 1 h über den Zeolith geleitet. Danach läßt man den Zeolith über 2 h im Inertgasstrom abkühlen. Das Produkt wird in 5 l Wasser suspendiert und 30 min gerührt.

Der Zeolith wird filtriert und in 5 l 1 m Salzsäure wieder aufgeschlämmt. Diese Suspension wird nun 1 h lang auf 90 °C erhitzt. Nach dem Abkühlen auf Raumtemperatur wird mit einem Büchnertrichter filtriert. Der Zeolith-Filterkuchen wird solange mit Wasser gewaschen, bis im Waschwasser mit $AgNO_3$-Lösung keine Chlorid-Ionen mehr nachgewiesen werden können. Anschließend wird der Zeolith 15 h bei 120 °C im Trockenschrank getrocknet. Dieser Zeolith weist analytisch ein $SiO_2/Al_2O_3$-Verhältnis von 200 auf.

Hydrophobie-Faktor:

Der Hydrophobie-Faktor (HF) beschreibt den Hydrophobierungsgrad des dealuminierten Zeolith Y.

Er ist durch den Quotienten

$$HF = \frac{\text{p – Xylol – Aufnahme bei 1 g/m}^3\text{ LM Konzentration(20°C)}\ \frac{g}{100\,g}}{\text{Wasser – Aufnahme bei 50 \% rel. Feuchte (adsorptiv)}\ \frac{g}{100\,g}}$$

definiert.

Beispiel 2:

Ein für die Formgebung von dealuminiertem Y-Zeolith gut geeignetes Tonmineral ist der Bentonit "Westone-L", der von der Firma ECC International Verkauf GmbH vertrieben wird. Der pH-Wert einer wäßrigen Aufschlämmung dieses Bentonits beträgt pH = 8,3.

Zur Herstellung von Strangpreßlingen werden 114,7 g pulverförmiger dealuminierter Y-Zeolith (hergestellt gemäß Beispiel 1) und 28,6 g Westone-L im Kneter 10 Minuten trocken gemischt. Hierzu werden 4,0 g Methylhydroxyethyl-cellulose und 15,0 g Pentaerythrit gegeben. Unter Kneten werden dann nach und nach 114 ml Wasser hinzugefügt. Die erhaltene plastische Knetmasse wird unter Verwendung eines Extruders zu Strangpreßlingen mit einem Durchmesse-r von 3 mm und einer Länge von etwa 15 mm verarbeitet. Diese werden im Trockenschrank bei 120 °C einige Stunden vorgetrocknet und dann im Kammerofen bei 950 °C calciniert. Die Aufheizrate beträgt 100 K/h. Die Endtemperatur wird 1 Stunde gehalten.

Die Bruchhärte der erhaltenen Formkörper beträgt 28 N. Die Gleichgewichtsbeladung an p-Xylol beträgt bei 20 °C und einer p-Xylol-Gasphasenkonzentration von 4,1 g/m³ 14,9 Gew.-%. Die Gleichgewichtsbeladung an Wasser bei 20 °C und einer relativen Feuchte des mit dem Zeolithen im Gleichgewicht stehenden Gasraumes von 68 % beträgt 2,9 Gew.-%.

Beispiel 3:

Für dieses Beispiel wird das Tonmineral Sepiolith der Bezeichnung "Sepiolith T1-400" verwendet, das von der Firma Chemie-Mineralien KG bezogen wird. Sein $Al_2O_3$-Gehalt beträgt nur 1,7 Gew.-%, so daß die Gefahr eines Rückumtausches von Aluminium in den dealuminierten Y-Zeolith gering ist. Der pH-Wert einer wäßrigen Aufschlämmung dieses Sepioliths beträgt pH = 8,5.

Eine extrusionsfähige Knetmasse wird durch Zusammengeben von 515 g pulverförmigem dealuminiertem Zeolith Y (DAY) (hergestellt gemäß Beispiel 1), 71,8 g Sepiolith, 20 g Methyl-hydroxyethyl-cellulose, 75,0 g Pentaerythrit als Porenbildner und 475 g Wasser hergestellt. Die Mischung wird 2 Stunden geknetet und dann extrudiert. Die Formlinge werden bei 120 °C einige Stunden vorgetrocknet und dann bei 950 °C calciniert. Die Aufheizrate beträgt 100 K/h und die Haltezeit 1 h.
Die erhaltenen Strangpreßlinge (Zylinder mit Durchmessern von 4 mm und Längen von ca. 6 mm) zeigen Bruchhärten von 28 N. Das Makroporenvolumen beträgt 0,55 ml/g. Für verschiedene Lösemittel werden Adsorptionsisothermen aufgenommen.

In den folgenden Tabellen sind die gemessenen Wertepaare beispielhaft für Toluol und Wasser wiedergegeben. Für den Hydrophobiefaktor wird ein Wert von 4,2 ermittelt.

Tabelle 3: Wertepaare der Toluoladsorptionsisotherme bei 20 °C

| Toluolkonzentration (g/m3) | Gleichgewichtsbeladung (g Toluol/100 g DAY) |
|---|---|
| 11,45 | 15,9 |
| 1,08 | 13,5 |
| 0,57 | 12,6 |
| 0,42 | 12,1 |
| 0,30 | 11,6 |
| 0,15 | 6,0 |

Tabelle 4a: Wertepaare der Wasseradsorptionsisotherme bei 20 °C (desorptiv bestimmt *)

| Wasserkonzentration ($g/m^3$) | Gleichgewichtsbeladung (g Wasser/ 100 g DAY) |
|---|---|
| 13,6 | 7,4 |
| 10,1 | 5,0 |
| 6,2 | 3,8 |
| 1,8 | 1,6 |

Tabelle 4b: Wertepaare der Wasseradsorptionsisotherme bei 20 °C (adsorptiv bestimmt**)

| Wasserkonzentration ($g/m^3$) | Gleichgewichtsbeladung (g Wasser/100 g DAY) |
|---|---|
| 1,8 | 1,6 |
| 6,9 | 2,9 |
| 10,0 | 4,5 |
| 13,6 | 7,4 |

Beispiel 4:

In einem 200-l-Kneter werden 33,3 kg Zeolithpulver (dealuminierter Y-Zeolith gemäß Beispiel 1), 4,5 kg Pentaerythrit als Porenbildner und 1,2 kg Methyl-hydroxyethyl-cellulose als Gleitmittel vermischt. Nach Zugabe von 16,8 kg Wasser wird die Masse 2 h geknetet. Anschließend werden 8,9 kg Tetramethoxysilan als Bindemittel, 0,6 kg Methanol und 7,6 kg Wasser hinzugefügt und die Mischung weitere 2 h geknetet. Die so erhaltene plastische Knetmasse wird unter Verwendung eines Kneters mit Austragsschnecke extrudiert. Mit Hilfe entsprechend gewählter Mundstücke werden Vollzylinder mit Durchmessern von 3 und 4 mm sowie Hohlzylinder mit Außendurchmessern von 5 mm hergestellt. Die Längen dieser Formlinge liegen zwischen 5 und 7 mm.

Die erhaltenen Formkörper werden bei 120 °C einige Stunden getrocknet und anschließend bei 950 °C calciniert. Diese Temperatur wird eine Stunde gehalten. Die Aufheizrate liegt bei 100 K/h.

Die Bruchhärte der Vollzylinder mit Durchmesern von 3 mm bzw. 4 mm liegt bei 37 N bzw. 30 N, die der Hohlzylinder bei 15 N. Das Makroporenvolumen der Vollzylinder beträgt 0,7 ml/g.

Am Beispiel der 4-mm-Vollzylinder sind für verschiedene Lösemittel Adsorptionsisothermen aufgenommen worden. In den folgenden Tabellen werden die gemessenen Wertepaare beispielhaft für Toluol und Wasser wiedergegeben. Für den Hydrophobiefaktor wird ein Wert von 4,9 ermittelt.

Tabelle 5: Wertepaare der Toluoladsorptionsisotherme bei 20 °C

| Toluol-Konzentration ($g/m^3$) | Gleichgewichtsbeladung (g Toluol/100 g DAY) |
|---|---|
| 12,2 | 17,9 |
| 1,2 | 15,1 |
| 0,46 | 13,9 |
| 0,128 | 2,7 |

Tabelle 6a: Wertepaare der Wasseradsorptionsisotherme bei 20 °C (desorptiv bestimmt*)

| Wasserkonzentration ($g/m^3$) | Gleichgewichtsbeladung (g Toluol/100 g DAY) |
|---|---|
| 14,0 | 6,8 |
| 10,1 | 4,9 |
| 6,7 | 3,9 |
| 1,76 | 1,4 |

Tabelle 6b: Wertepaare der Wasseradsorptionsisotherme bei 20 °C (adsorptiv bestimmt**)

| Wasserkonzentration ($g/m^3$) | Gleichgewichtsbeladung (g Toluol / 100 g DAY) |
|---|---|
| 1,76 | 1,4 |
| 6,58 | 2,8 |
| 10,04 | 4,2 |
| 13,98 | 6,7 |

Mischisothermen von dealuminiertem Y-Zeolith zeigen die hydrophoben Eigenschaften dieses Adsorbens besonders deutlich.

Im folgenden sind die Wertepaare für die Mischadsorptionsisotherme Toluol/Wasser wiedergegeben, die aufgenommen werden, indem man den Formkörper gleichzeitig Wasser (in einer konstanten Gasphasenkonzentration von 12,4 $g/m^3$) und Toluol (variable Gasphasenkonzentrationen) anbietet.

Tabelle 7: Wertepaare der Mischadsorptionsisotherme für Toluol/Wasser bei 20 °C

| Konzentration an Toluol ($g/m^3$) | Gleichgewichtsbeladung (g/100 g DAY) | | |
|---|---|---|---|
| | Gesamt | Toluol | $H_2O$ |
| 11,5 | 19,1 | 17,1 | 2,0 |
| 1,25 | 17,8 | 14,5 | 3,3 |
| 0,135 | 7,6 | 3,6 | 4,0 |

Beispiel 5:

1,03 kg dealuminerter Y-Zeolith (hergestellt gemäß Beispiel 1), 408 g Tetraethoxysilan, 40 g Methyl-hydroxyethyl-cellulose, 150 g Pentaerythrit und 700 g Wasser werden zusammengegeben und 2 Stunden geknetet. Die erhaltene Masse wird zu Vollzylindern mit Durchmessern von 4 mm und Längen von etwa 6 mm extrudiert. Anschließend werden die Formkörper 2 Tage an Luft und dann einige Stunden im Trockenschrank bei 120 °C getrocknet. Die Calcinierung erfolgt bei 950 °C (Aufheizrate: 100 K/h; Haltezeit: 1 h).

Die Bruchhärte der erhaltenen Vollzylinder beträgt 55 N.

Die Gleichgewichtsbeladung an p-Xylol beträgt bei 20 °C und einer p-Xylol-Gleichgewichts-Gasphasenkonzentration von 4,1 g/m³ 17,3 Gew.-%.

Die Gleichgewichtsbeladung an Wasser bei 20 °C und einer relativen Feuchte des mit dem Zeolithen im Gleichgewicht stehenden Gasraumes von 68 % beträgt 3,6 Gew.-%.

Beispiel 6:

32,4 kg dealuminierter Y-Zeolith (hergestellt gemäß Beispiel 1), 8,76 kg "Ester 40" (teilkondensiertes Tetraethoxylsilan, 2,38 kg Methyl-hydroxyethyl-cellulose, 4,47 kg Pentaerythrit und 25,0 l Wasser werden nach und nach zusammengegeben und die Mischung insgesamt 5 h geknetet.

Die erhaltene Knetmasse wird unter Verwendung eines Kneters mit Austragsschnecke zu Vollzylindern mit Durchmessern von 4 mm und Längen von circa 7 mm extrudiert. Nach dem Vortrocknen der Formlinge bei -120 °C wird bei 950 °C im Muffelofen calciniert (Aufheizrate: 100 K/h; Haltezeit: 1 h). Die Bruchhärte der Vollzylinder beträgt 64 N. Die Makroporen nehmen ein Volumen von 0,63 ml/g ein.

Für verschiedene Lösemittel werden Adsorptionsisothermen aufgenommen.

In den folgenden Tabellen sind die gemessenen Wertepaare beispielhaft für Toluol und Wasser wiedergegeben. Für den Hydrophobiefaktor wird ein Wert von 2,5 ermittelt.

Tabelle 8: Wertepaare der Toluoladsorptionsisotherme bei 20 °C

| Toluolkonzentration ($g/m^3$) | Gleichgewichtsbeladung (g Toluol / 100 g DAY) |
|---|---|
| 12,0 | 18,1 |
| 2,1 | 16,0 |
| 0,97 | 14,9 |
| 0,57 | 13,8 |
| 0,19 | 8,8 |
| 0,10 | 3,2 |

Tabelle 9a: Wertepaare der Wasseradsorptionsisotherme bei 20 °C (desorptiv bestimmt*)

| Wasserkonzentration ($g/m^3$) | Gleichgewichtsbeladung (g Wasser / 100 g DAY) |
|---|---|
| 13,7 | 12,4 |
| 10,0 | 7,1 |
| 6,23 | 5,2 |
| 1,76 | 2,0 |

Tabelle 9b: Wertepaare der Wasseradsorptionsisotherme bei 20 °C (adsorptiv bestimmt**)

| Wasserkonzentration ($g/m^3$) | Gleichgewichtsbeladung (g Wasser / 100 g DAY) |
|---|---|
| 1,76 | 2,0 |
| 6,92 | 4,2 |
| 10,0 | 5,8 |
| 13,7 | 12,4 |

Beispiel 7:

102 g dealuminerter Y-Zeolith (hergestellt gemäß Beispiel 1) wird im Kneter vorgelegt und 59 g Kieselsol ("LUDOX LS" der Firma Du Pont; $SiO_2$-Gehalt: 30 Gew.-%) allmählich zugegeben. Nach einer Knetzeit von 10 Minuten wird 6,2 g Methyl-hydroxyethyl-cellulose (vorgequollen in 75 g Wasser) zugegeben. Nach weiterem Kneten wird eine plastische Masse erhalten, die mit Hilfe eines Extruders zu Vollzylindern mit Durchmesser von 3 mm und Länge von etwa 15 mm verpreßt wird.

Anschließend wird bei 120 °C einige Stunden getrocknet und dann bei 850 °C calciniert (Aufheizrate: 100 K/h). Die Bruchhärte der erhaltenen Formkörper liegt bei 14 N.

Beispiel 8:

102 g dealuminierter Y-Zeolith, 45 g Tetramethoxysilan, 6,2 g Methyl-hydroxyethyl-cellulose (vorgequollen), 10,0 g Fructose, aufgemahlen in einer Kugelmühle, und 77 g Wasser werden in einem Kneter zu einer plastischen Masse verarbeitet. Die mit Hilfe eines Extruders hergestellten Vollzylinder, die bei 120 °C getrocknet und bei 850 °C calciniert werden, weisen Bruchhärten von 46 N auf.

Beispiel 9:

Produktionsabwasser eines Lackierbetriebes, das verschiedene Lösemittel (Hauptkomponenten: Ethanol, Ethylacetat, tert. Butanol, Methylacetat, Isopropanol und Ethylglykol) in einer Gesamtkonzenträtion von 880 mg/l enthält, wird in einer Menge von 100 ml auf 1 g pulverförmigen dealuminierten Y-Zeolith gegeben. Nach 2 Stunden (T = 20 °C) hat der Zeolith knapp die Hälfte der Schadstoffe adsorbiert (Lösemittel-Gesamtkonzentration: 410 mg/l).

Beispiel 10:

Strangpreßlinge hergestellt mit Tetramethoxysilan als Bindemittel gemäß Beispiel 4, werden bei 850, 900, 950 und 1000 °C calciniert. Die Aufheizgeschwindigkeit beträgt 100 K/h, die Endtemperatur wird 1 h gehalten. Die Eigenschaften der erhaltenen Formkörper sind in der nachfolgenden Tabelle zusammengestellt.

Die hierin aufgeführten Adsorptionsdaten werden bei einer Temperatur von 20 °C bestimmt. Zur Ermittlung der p-Xylol-Adsorptionskapazität wird eine Gasstromkonzentration von 4,1 g/m³ gewählt.

Die Werte für die Wasseraufnahme werden bei einer relativen Feuchte des Luftstromes von 68 % erhalten.

| Calcinier-temperatur (°C) | Gleichgewichts-Beladung (g/100 g DAY) | |
|---|---|---|
| | p-Xylol | $H_2O$ |
| 850 | 14,0 | 8,2 |
| 900 | 12,8 | 4,8 |
| 950 | 12,0 | 2,4 |
| 1000 | 11,9 | 2,2 |

Die Daten zeigen, daß mit zunehmender Calciniertemperatur die p-Xylol-Beladung leicht zurückgeht. Sehr stark wird das Wasseraufnahmevermögen beeinflußt.

Eine Erhöhung der Calciniertempratur von 850 °C auf 1000 °C bewirkt einen Rückgang der Wasserbeladung auf knapp ein Viertel des ursprünglichen Wertes. Diese geringe Wasseraufnahme ist für die beabsichtigte Verwendung der Zeolithformkörper zur selektiven Adsorption von organischen Komponenten aus Abwässern oder feuchter Abluft von entscheidender Bedeutung. Der bei hohen Temperaturen calcinierte dealuminierte Y-Zeolith wird daher als hydrophobes Adsorbens bezeichnet.

Beispiel 11:

In den Abbildungen 1, 2 und 3 sind Adsorptionsisothermen für die Adsorption von gasförmigem Toluol, p-Xylol und n-Hexan (Wassergehalt jeweils < 0,1 Gew.-%) an dealuminiertem Y-Zeolith dargestellt. Es sind jeweils Kurven für Pulver und Vollzylinder (hergestellt nach Beispiel 4; ∅ = 4 mm, 1 = 6 mm; bindende Matrix 10 Gew.-% $SiO_2$) wiedergegeben.

Die Gleichgewichtsbeladung der Formkörper beträgt bei hohen Gleichgewichts-Gasphasenkonzentrationen von Toluol und p-Xylol jeweils etwa 90 % der des Pulvers. Der Unterschied von circa 10 % entspricht damit dem Bindemittelanteil. Daraus folgt, daß die Adsorptionskapazität des Pulvers durch den Formgebungsprozeß nicht erniedrigt wird.

Durch die Formgebung kann im übrigen das Adsorptionsverhalten von dealuminiertem Y-Zeolith auch positiv beeinflußt werden. Wie die Isotherme für n-Hexan zeigt, ist eine positive Veränderung des Isothermenverlaufs beim Übergang vom Pulver zum Formkörper möglich.

Beispiel 12:

Dealuminierter Y-Zeolith (pulverförmig) als hydrophobes Adsorbens für die Adsorption gasförmiger organischer Stoffe.

An dem nach Beispiel 1 hergestellten dealuminierten Y-Zeolith (pulverförmig) werden Adsorptionsisothermen für gasförmiges Toluol und für gasförmiges Wasser ermittelt.

Hierbei wird ein toluol- bzw. wasserhaltiger Luftstrom solange über das Pulver geleitet, bis sich auf dem Zeolithen die jeweilige Gleichgewichtsbeladung an Toluol bzw. Wasser einstellt, die dann durch Auswiegen ermittelt wird.

Die Gleichgewichtsbeladungen sind zusammen mit den zugehörigen Gasphasen-Gleichgewichtskonzentrationen von Toluol bzw. Wasser in den folgenden Tabellen zusammengestellt.

Tabelle 1: Wertepaare der Toluoladsorptionsisotherme bei 20 °C

| Toluol-Konzentration ($g/m^3$) | Gleichgewichtsbeladung (g Toluol/100g DAY) |
|---|---|
| 12,16 | 19,2 |
| 1,16 | 16,3 |
| 0,65 | 15,2 |
| 0,31 | 13,5 |
| 0,21 | 9,3 |
| 0,12 | 3,1 |

Tabelle 2a: Wertepaare der Wasseradsorptionsisotherme bei 20 °C (desorptiv bestimmt*)

| Wasserkonzentration ($g/m^3$) | Gleichgewichtsbeladung (g Wasser/100 g DAY) |
|---|---|
| 13,6 | 7,2 |
| 10,2 | 5,0 |
| 6,8 | 3,8 |
| 1,76 | 0,9 |

Tabelle 2b: Wertepaare der Wasseradsorptionsisotherme bei 20 °C (adsorptiv bestimmt **)

| Wasserkonzentration ($g/m^3$) | Gleichgewichtsbeladung (g Wasser/100 g DAY) |
|---|---|
| 1,76 | 0,9 |
| 6,9 | 2,5 |
| 10,3 | 4,1 |
| 13,6 | 7,2 |

Diese Adsorptionsisothermen zeigen, daß Wasser kaum, organische Stoffe jedoch sehr gut an dealuminiertem Y-Zeolith adsorbiert werden, der damit als hydrophobes Adsorbens bezeichnet werden kann.

* "desorptiv bestimmt" bedeutet, daß die Wasserkonzentration im Luftstrom von Meßpunkt zu Meßpunkt kontinuierlich erniedrigt wurde.

** "adsorptiv bestimmt" bedeutet, daß die Wasserkonzentration im Luftstrom von Meßpunkt zu Meßpunkt kontinuierlich erhöht wurde.

## Patentansprüche

1. Formkörper, welche dealuminierten Zeolith Y, mindestens ein Bindemittel enthalten und einen Hydrophobiefaktor von 1,5 bis 6,0 aufweisen.

2. Verfahren zur Herstellung der Formkörper nach Anspruch 1
**dadurch gekennzeichnet,**
daß man pulverförmigen dealuminierten Zeolith Y mit mindestens einem Bindemittel, dessen Süspension in Wasser einen pH-Wert von 10 nicht übersteigt, gegebenenfalls unter Zusatz eines Gleithilfsmittels und/oder eines Porenbildners und gegebenenfalls mit Wasser oder einem organischen Lösungsmittel vermischt, die erhaltene Masse zu Formkörpern verpreßt, die Formkörper trocknet und bei 850° bis 1100°C calciniert.

3. Verfahren nach Anspruch 2,
**dadurch gekennzeichnet,**
daß man als Bindemittel ein Tonmineral, dessen Aufschlämmung in Wasser einen pH-Wert von 10 nicht übersteigt, in Mengen von 5 bis 40 Prozent, bezogen auf die eingesetzte getrocknete (atro) Zeolithmasse, einsetzt.

4. Verfahren nach Anspruch 2,
**dadurch gekennzeichnet,**
daß man als Bindemittel Kieselsäureester und/oder teilkondensierte Kieselsäureester in einer Menge von 10 bis 70 Gew.-%, bezogen auf die eingesetzte getrocknete (atro) Zeolithmasse, einsetzt.

5. Verfahren nach Anspruch 2,
**dadurch gekennzeichnet,**
daß man als Bindemittel eine Mischung beliebiger Zusammensetzung aus Tonmineralen, deren Aufschlämmung in Wasser einen pH-Wert von 10 nicht übersteigt, und eine oder mehrere $SiO_2$-Quellen in Mengen von insgesamt 5 bis 70 Prozent in Bezug auf die eingesetzte getrocknete (atro) Zeolithmasse einsetzt.

6. Verfahren nach Anspruch 2,
**dadurch gekennzeichnet,**
daß man die Formkörper im Anschluß an den Formgebungsprozeß bei Temperaturen zwischen Raumtemperatur und 450 °C trocknet.

7. Verfahren nach Anspruch 2,
**dadurch gekennzeichnet,**
daß man der zu verformenden Mischung aus Zeolith und Bindemittel Gleithilfsmittel in Mengen von 1 bis 20 Prozent, bezogen auf die eingesetzte getrocknete (atro) Zeolithmasse, beimengt.

8. Verfahren nach Anspruch 2,
**dadurch gekennzeichnet,**
daß man der zu verformenden Mischung aus Zeolith und Bindemittel Porenbildner in Mengen von 1 bis

30 Prozent, bezogen auf die eingesetzte getrocknete (atro) Zeolithmasse, zusetzt.

9. Verwendung der Formkörper nach Anspruch 1, als Adsorbentien bei der Reinigung von Abluft und Abwässern.

**Claims**

1. Mouldings which contain dealuminated zeolite Y, at least one binder and have a hydrophobicity factor of 1.5 to 6.0.

2. Process for the production of mouldings according to claim 1,
**characterised in that**
pulverulent dealuminated zeolite Y is mixed with at least one binder, an aqueous suspension of which has a pH value of no greater than 10, optionally with the addition of a lubricant and/or a pore former and optionally with water or an organic solvent, the resultant mass is shaped into mouldings, the mouldings are dried and calcined at 850° to 1100°C.

3. Process according to claim 2,
**characterised in that**
a clay mineral, an aqueous suspension of which has a pH value of no greater than 10, is used as binder in quantities of 5 to 40% related to the mass of dried (atro) zeolite used.

4. Process according to claim 2,
**characterised in that**
silicic acid esters and/or partially condensed silicic acid esters are used as binder in quantities of 10 to 70 wt.% related to the mass of dried (atro) zeolite used.

5. Process according to claim 2,
**characterised in that**
a mixture of any desired composition of clay minerals, an aqueous suspension of which has a pH value of no greater than 10, and one or more sources of $SiO_2$ is used as binder in quantities of in total 5 to 70% related to the mass of dried (atro) zeolite used.

6. Process according to claim 2,
**characterised in that,**
after the shaping process, the mouldings are dried at temperatures between room temperature and 450°C.

7. Process according to claim 2,
**characterised in that**
lubricants are added to the mixture of zeolite and binder to be moulded in quantities of 1 to 20% related to the mass of dried (atro) zeolite used.

8. Process according to claim 2,
**characterised in that**
pore formers are added to the mixture of zeolite and binder to be moulded in quantities of 1 to 30% related to the mass of dried (atro) zeolite used.

9. Use of the mouldings according to claim 1 as adsorbents in the purification of exhaust air and effluents.

**Revendications**

1. Solides de moulage qui contiennent une zéolite Y désaluminisée, au moins un agent liant et qui manifestent un facteur d'hydrophobie de 1,5 à 6,0.

2. Procédé d'obtention des solides de moulage selon la revendication 1, caractérisé en ce que l'on mélange la zéolite Y désaluminisée avec au moins un agent liant - dont la suspension dans l'eau ne dépasse pas

une valeur de pH de 10 - le cas échéant tout en ajoutant un agent lubrifiant et/ou un agent formateur de pores et le cas échéant avec de l'eau ou un solvant organique que l'on comprime la masse obtenue en solides moulés, que l'on sèche les solides moulés et que l'on calcine à 850 à 1100°C.

3. Procédé selon la revendication 2, caractérisé en ce que l'on met en oeuvre comme agent liant un minéral argileux, dont la suspension dans l'eau ne dépasse pas une valeur de pH de 10, en quantités allant de 5 à 40 % rapportées à la masse de zéolite sèche (atro) mise en oeuvre.

4. Procédé selon la revendication 2, caractérisé en ce que l'on met en oeuvre comme agent liant un ester d'acide silicique, et/ou un ester d'acide silicique partiellement condensé en une quantité allant de 10 à 70 % en poids, rapportée à la masse de zéolite sèche (atro) mise en oeuvre.

5. Procédé selon la revendication 2, caractérisé en ce que l'on met en oeuvre comme agent liant un mélange de composition quelconque à base de minéraux argileux dont la suspension dans l'eau ne dépasse pas une valeur de pH de 10 et une ou plusieurs sources de $SiO_2$ en quantités de - au total - 5 à 70 % en relation avec la masse de zéolite sèche (atro) mise en oeuvre.

6. Procédé selon la revendication 2, caractérisé en ce que l'on sèche les solides moulés en connexion avec le processus de mise en forme à des températures entre la température ambiante et 450° C.

7. Procédé selon la revendication 2, caractérisé en ce que l'on mélange un adjuvant de glissement au mélange à mettre en forme à base de zéolite et d'un agent liant, en quantités allant de 1 à 20 % -rapportées à la masse de zéolite séchée (atro) mise en oeuvre.

8. Procédé selon la revendication 2, caractérisé en ce que l'on ajoute au mélange à mettre en forme à base de zéolite et d'un agent liant, un agent formateur de pores en quantités de 1 à 30 %, rapporté à la masse de zéolite séchée (atro) mise en oeuvre.

9. Utilisation des solides moulés selon la revendication 1 en tant qu'agents adsorbants pour l'épuration de l'air vicié et des eaux usées.

*Fig. 1*

DAY - ZEOLITH : TOLUOL ADSORPTION

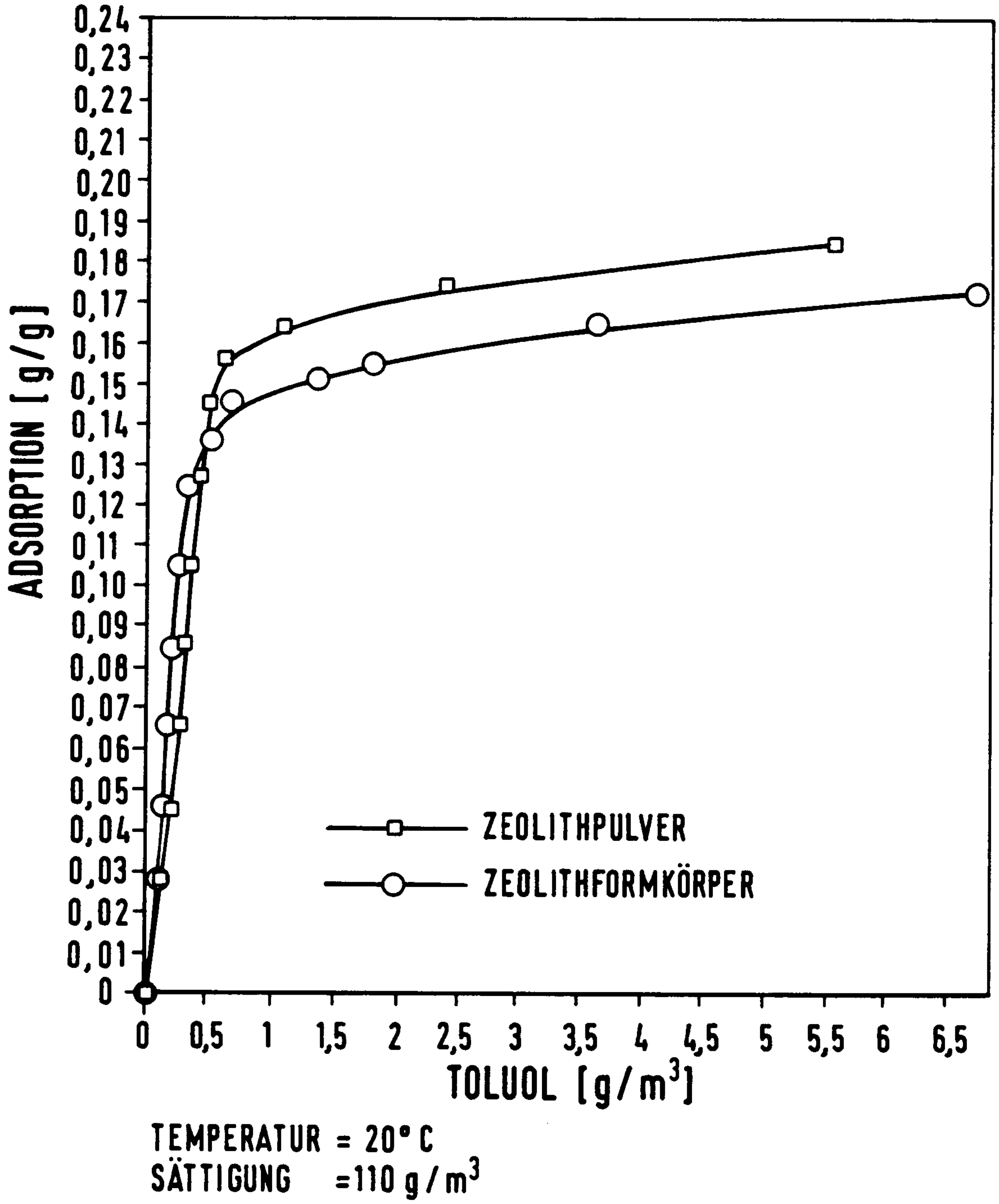


TEMPERATUR = 20° C
SÄTTIGUNG =110 g/m³

Fig. 2

DAY- ZEOLITH : p-XYLOL-ADSORPTION

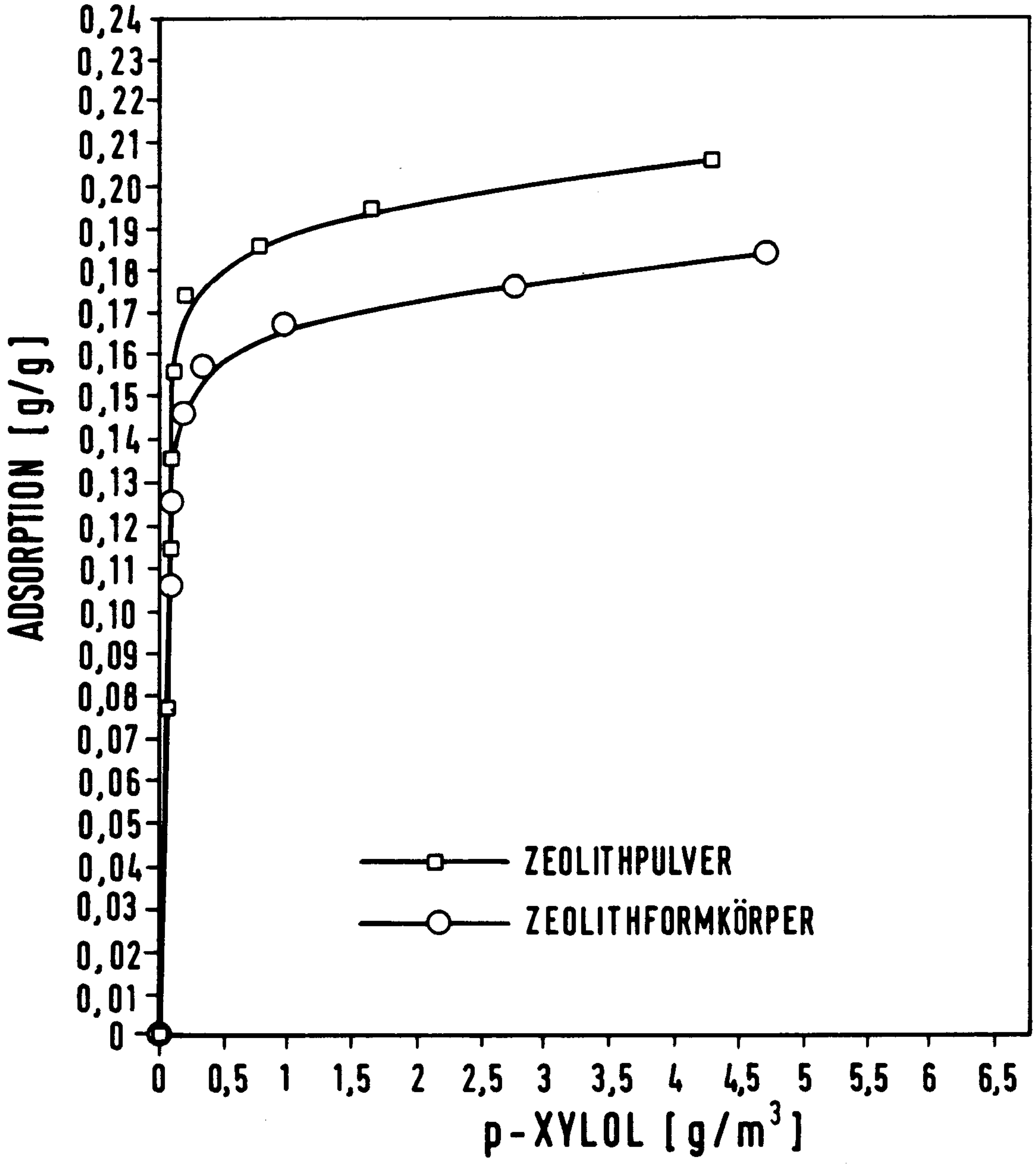


TEMPERATUR = 20°C
SÄTTIGUNG = 38,4 g/m3

Fig. 3

DAY-ZEOLITH: n-HEXAN - ADSORPTION

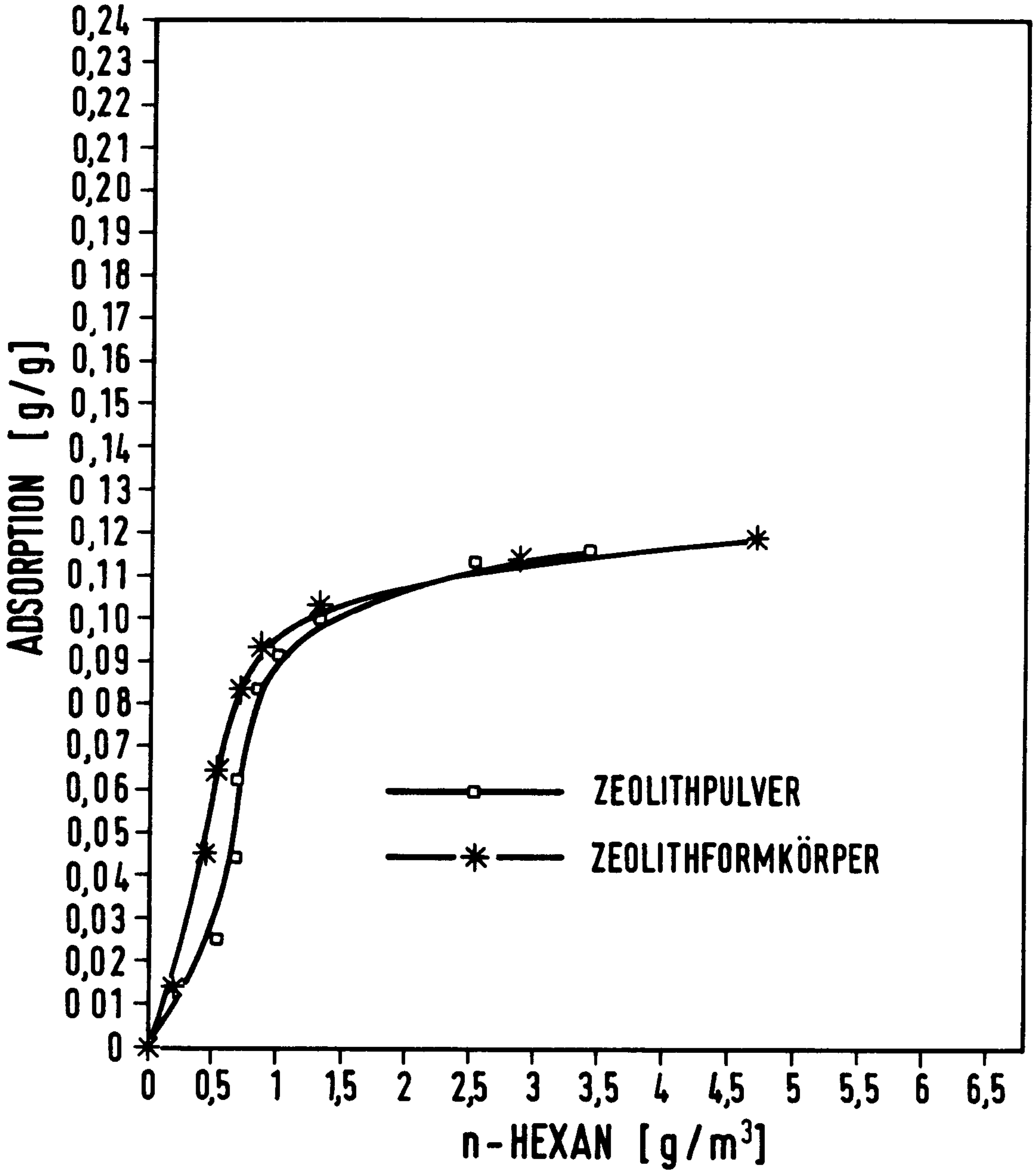


TEMPERATUR = 20 °C
SÄTTIGUNG = 575 g/m³